# EUROPEAN PATENT SPECIFICATION

(11) **EP 3 641 691 B1**
(45) Date of publication and mention of the grant of the patent: **16.08.2023**
(21) Application number: 18820788.0
(22) Date of filing: 13.03.2018
(51) Int. Cl.: A61C 7/12, A61C 7/14, A61C 7/16

(54) **BRACKET EXTENSION SYSTEM**
KLAMMERVERBREITERUNGSSYSTEM
SYSTÈME D'EXTENSION DE BRACKET

(30) Priority: 19.06.2017 US 201715627226; 28.12.2017 US 201715856757
(43) Date of publication of application: 29.04.2020
(73) Proprietor: KLOwen Braces, Inc., Lakeway, TX 78734 (US)
(72) Inventor: Owen, Brandon, Lakeway, TX 78738 (US)
(74) Representative: Kador & Partner Part mbB
(86) International application number: PCT/US2018/022167
(87) International publication number: WO 2018/236436

(56) References cited:
- US-A- 3 946 488
- US-A- 4 139 945
- US-A- 4 209 906
- US-A- 4 487 581
- US-A1- 2006 228 662
- US-A1- 2015 099 237
- US-A1- 2015 099 237
- US-A1- 2015 245 983
- US-A1- 2018 116 766

## Description

### I. TECHNICAL FIELD

An orthodontic bracket extension system for orthodontic braces, the orthodontic bracket extension system including a plurality of bracket base extensions each having an aperture in which a corresponding one of a plurality of bracket base can be disposed to increase a bracket bonding surface area for greater securement of each of the plurality of brackets to each of a corresponding plurality of teeth.

### II. BACKGROUND

Conventional orthodontic brackets have bracket bases which are configured to directly bond to the surface of a tooth. US 3946488 discloses an orthodontic bracket system. However, particular prescriptions for forces or pressures which transfer from an archwire disposed within the bracket to the bracket can be sufficient to cause the bracket base to detach from the surface of the corresponding tooth.

Accordingly, a need exists for a system which can provide greater adherent forces between the bracket and the tooth surface to eliminate or reduce the occurrence of detachment of the bracket base from the surface of the corresponding tooth.

### III. DISCLOSURE OF THE INVENTION

The invention provides an orthodontic bracket extension system (1), comprising:
a bracket (5) of an orthodontic appliance (2) said bracket including:
   a bracket base (8) having opposed bracket base first and second surfaces (15) (16) each delimited by a bracket base periphery (17) which defines a bracket base surface area (18) of said bracket base first and second surfaces (15) (16); and
   a bracket body (19) having a bracket body length (20) disposed between bracket body first and second ends (21)(22), said bracket body first end (21) coupled to said bracket base second surface (16), said bracket body second end (22) having an archwire slot (23) configured to receive an archwire (6) of said orthodontic appliance (2); and
a bracket base extension (4) having opposed bracket base extension first and second surfaces (10)(11) delimited by a bracket base extension periphery (17) which defines a bracket base extension surface area (25) of said bracket base extension first and second surfaces(10)(1 1), said bracket base extension (4) having an aperture (9) delimited by an aperture periphery (26) communicating between said bracket base extension first and second surfaces(10)(11), said bracket base (8) disposable in said aperture (9) of said bracket base extension (4) to locate said bracket base first surface (15) in relation to said bracket base extension first surface (10) to allow said bracket base first surface (15) and said bracket base extension first surface (10) to fixedly mount to one of a plurality of teeth (3) in a dental arch, wherein the bracket base (8) is disposed in the aperture (9) of the bracket base extension (4) and fixedly secured to the bracket extension (4) to form a one-piece construct.
The invention further provides a method of producing an orthodontic bracket extension system (1) according to any one of the preceding claims, said method comprising:
obtaining a bracket (5) for an orthodontic appliance (2), said bracket (5) including:
   a bracket base (8) having opposed bracket base first and second surfaces (15)(16) delimited by a bracket base periphery (17) which defines a bracket base surface area (18) of said bracket base first and second surfaces (15)(16); and
   a bracket body (19) having a bracket body length (20) disposed between bracket body first and second ends (21)(22), said bracket body first end (21) coupled to said bracket base second surface (16), said bracket body second end (22) having an archwire slot (23) configured to receive an archwire (6) of said orthodontic appliance (2); and
obtaining a bracket base extension (4) having opposed bracket base extension first and second surfaces (10)(11) delimited by a bracket base extension periphery (17) which defines a bracket base extension surface area (25) of said bracket base extension first and second surfaces (10)(11), said bracket base extension (4) having an aperture (9) delimited by an aperture periphery (26) which communicates between said bracket base extension first and second surfaces (10)(11) configured to fixedly secure said bracket base (8) to form a one-piece construct, said bracket base extension first surface (10) having a greater area than said bracket base first surface (15) area.

Further disclosed but not within the scope of the claims is a method of using an orthodontic bracket extension system, the method including one or more of: selecting a bracket for an orthodontic appliance, the bracket including a bracket base having opposed bracket base first and second surfaces delimited by a bracket base periphery which defines a bracket base surface area of the bracket base first and second surfaces and a bracket body having a bracket body length disposed between bracket body first and second ends, the bracket body first end coupled to the bracket base second surface, the bracket body second end terminating in an archwire slot configured to receive an archwire of the orthodontic appliance; selecting a bracket base extension having opposed bracket base extension first and second surfaces delimited by a bracket base extension periphery which defines a bracket base extension surface area of the bracket base extension first and second surfaces having an aperture communicating between the bracket base extension first and second surfaces which can receive or secure the bracket base to locate the bracket base first surface in relation to the bracket base extension first surface, whereby the bracket base first surface associated with the bracket base extension first surface has a configuration which can be fixedly mounted to one of a plurality of teeth in a dental arch, ; disposing or securing the bracket base in the aperture of the bracket base extension; and fixedly mounting the bracket base disposed or secured in the aperture of the bracket base to the tooth in the dental arch.

Naturally, further objects of the invention are disclosed throughout other areas of the specification, drawings, and claims.

### IV. BRIEF DESCRIPTION OF THE DRAWINGS

Figure 1 is an illustration of a particular embodiment of the orthodontic bracket extension system.
Figure 2A is an illustration of a particular embodiment of the orthodontic bracket extension system mounted to lingual surfaces of a plurality of teeth.
Figure 2B is an illustration of a particular embodiment of the orthodontic bracket extension system mounted to facial surfaces of a plurality of teeth.
Figure 3A is an exploded view of a bracket having a bracket base disposable in an aperture of a particular embodiment of a bracket base extension.
Figure 3B is perspective second surface elevation view of a particular embodiment of a bracket base disposed in the aperture of a bracket base extension and secured by laser welding at the juncture of the bracket base periphery and the aperture periphery of bracket base extension.
Figure 3C is first surface elevation view of a particular embodiment of a bracket base disposed in the aperture of a bracket base extension and secured by laser welding at the juncture of the bracket base periphery and the aperture periphery of bracket base extension.
Figure 3D is first surface elevation view of a particular embodiment of a bracket base disposed in the aperture of a bracket base extension the first surface of the bracket base and the bracket base extension each including mechanical bond enhancement elements.
Figure 3E is first surface elevation view of a particular embodiment of a bracket base including chemical bond enhancement elements.
Figure 3F is a lingual view of an incisor having a particular embodiment of the orthodontic bracket extension system mounted to the lingual surface of the incisor.
Figure 3G is an incisal view of an incisor having a particular embodiment of the orthodontic bracket extension system mounted to the lingual surface of the incisor.
Figure 3H is an is an exploded view of a bracket having a bracket base disposable in an aperture of a particular embodiment of a bracket base extension.
Figure 3I is perspective view of the particular embodiment of the bracket base extension shown in Figure 3H mounted to the facial surface of an incisor.
Figure 3J is an incisal cross section view as shown in Figure 3F of a particular embodiment of the orthodontic bracket extension system having an aperture margin overlapping a bracket base margin to secure the bracket base in the aperture of the bracket base extension.
Figure 3K is an incisal cross section view as shown in Figure 3F of a particular embodiment of the orthodontic bracket extension system having an aperture margin overlapping a bracket base margin to secure the bracket base in the aperture of the bracket base extension.
Figure 4A is a lingual view of a bicuspid (premolar) having a particular embodiment of the orthodontic bracket extension system mounted to the lingual surface of the bicuspid (premolar).
Figure 4B is a distal view of a bicuspid (premolar) having a particular embodiment of the orthodontic bracket extension system mounted to the lingual surface of the bicuspid (premolar), whereby the bracket base extension includes a partial band.
Figure 5A is an incisal view of a molar having a particular embodiment of the orthodontic bracket extension system mounted to the lingual surface of the molar, whereby the bracket base extension includes a mesial-distal band, the bracket base coupled to the mesial-distal band proximate a mesial-distal band lingual portion.
Figure 5B is a mesiofacial view of a molar having a particular embodiment of the orthodontic bracket extension system mounted to the lingual surface of the molar, whereby the bracket base extension includes a mesial-distal band, the bracket base coupled to the mesial-distal band proximate a mesial-distal band lingual portion.
Figure 5C is distoligual view of a molar having a particular embodiment of the orthodontic bracket extension system mounted to the lingual surface of the molar, whereby the bracket base extension includes a mesial-distal band, the bracket base coupled to the mesial-distal band proximate a mesial-distal band lingual portion.
Figure 6A is an incisal view of a molar having a particular embodiment of the orthodontic bracket extension system mounted to the lingual surface of the molar, whereby the bracket base extension includes a coronal band, the bracket base coupled to the coronal band proximate a coronal band lingual portion.
Figure 6B is meisofacial view of a molar having a particular embodiment of the orthodontic bracket extension system mounted to the lingual surface of the molar, whereby the bracket base extension includes a coronal band, the bracket base coupled to the coronal band proximate a coronal band lingual portion.
Figure 6C is distolingual view of a molar having a particular embodiment of the orthodontic bracket extension system mounted to the lingual surface of the molar, whereby the bracket base extension includes a coronal band, the bracket base coupled to the coronal band proximate a coronal band lingual portion.

### V. MODE(S) FOR CARRYING OUT THE INVENTION

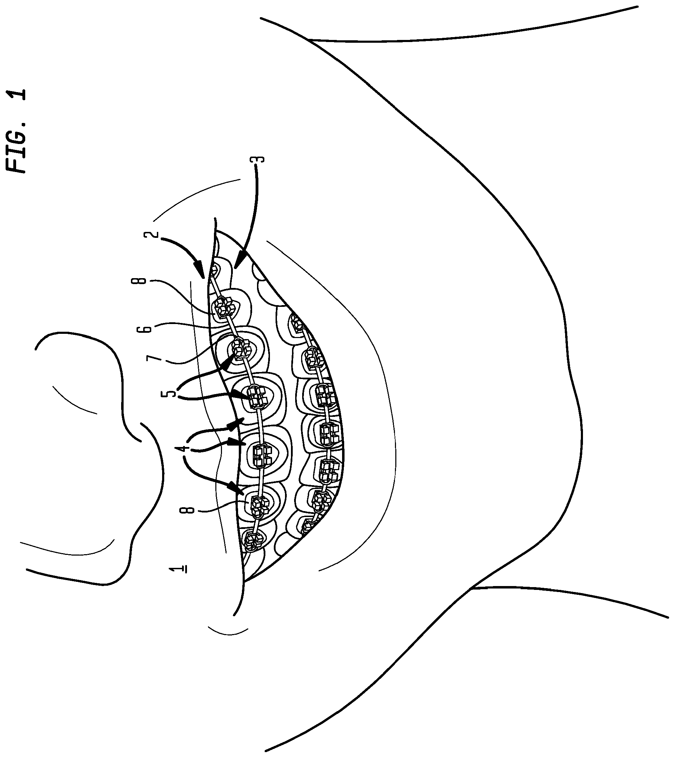

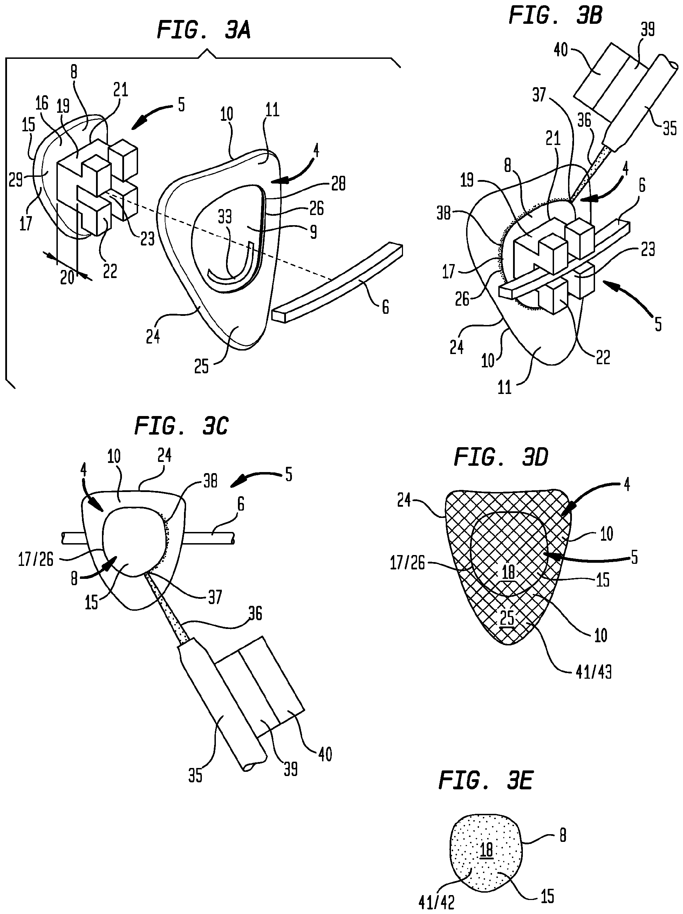

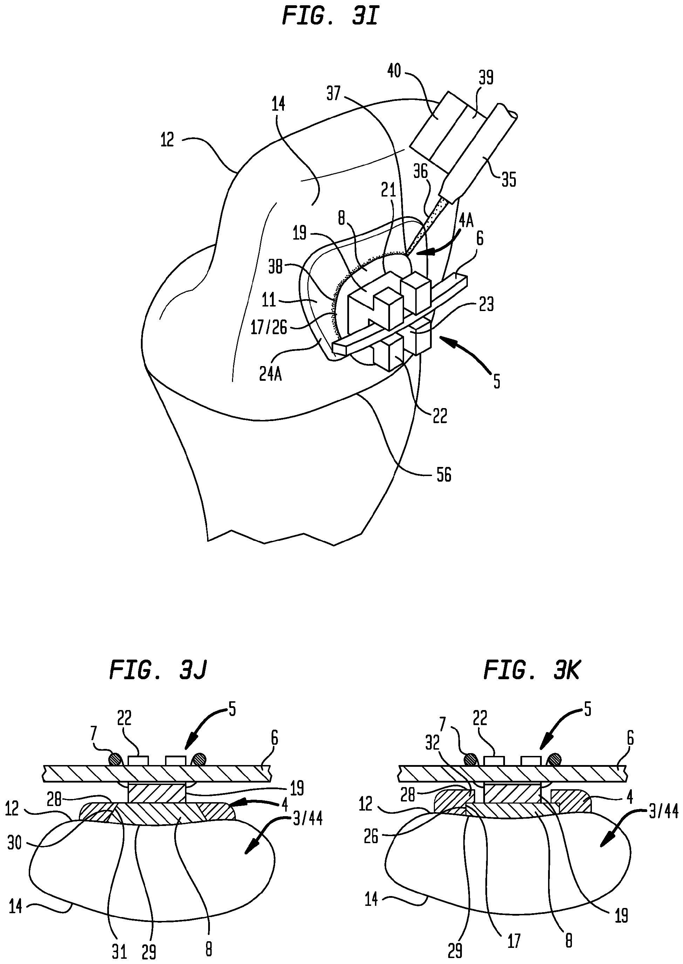

Now referring primarily to Figure 1, embodiments of an orthodontic bracket extension system (1) can be utilized for orthodontic treatment performed by fixing an orthodontic appliance (2) to a plurality of teeth (3). Typically, but not necessarily, the orthodontic bracket extension system (1) includes one or more bracket base extensions (4), a plurality of brackets (5), an archwire (6), and a ligature (7). As shown in the illustrative examples of Figure 3A, each bracket (5) can have a bracket base (8) which can be received or secured in an aperture (9) communicating between opposed bracket base extension first and second surfaces (10)(11) of the bracket base extension (4). As to particular embodiments, the bracket base (8) can mounted to the surface of a tooth (3) and the bracket base extension (4) subsequently mounted to the tooth (3) with the bracket base (8) disposed in the aperture (9) of the bracket base extension (4), or the bracket base (8) secured within the aperture (9) of the bracket base extension (4) can be mounted as one-piece to the tooth (3). A plurality of brackets (5) correspondingly mounted to a plurality of teeth (3) can be intercoupled by the archwire (6), and the ligature (7) can be used to retain the archwire (6) in association with the plurality of brackets (5). The archwire (6) can generate external forces which can be transferred to the bracket base (8) and the bracket base extension (4) to urge the teeth (3) toward a targeted position or orientation over a period of time. Accordingly, the orthodontic appliance (2) can be utilized to correct malocclused teeth (3).

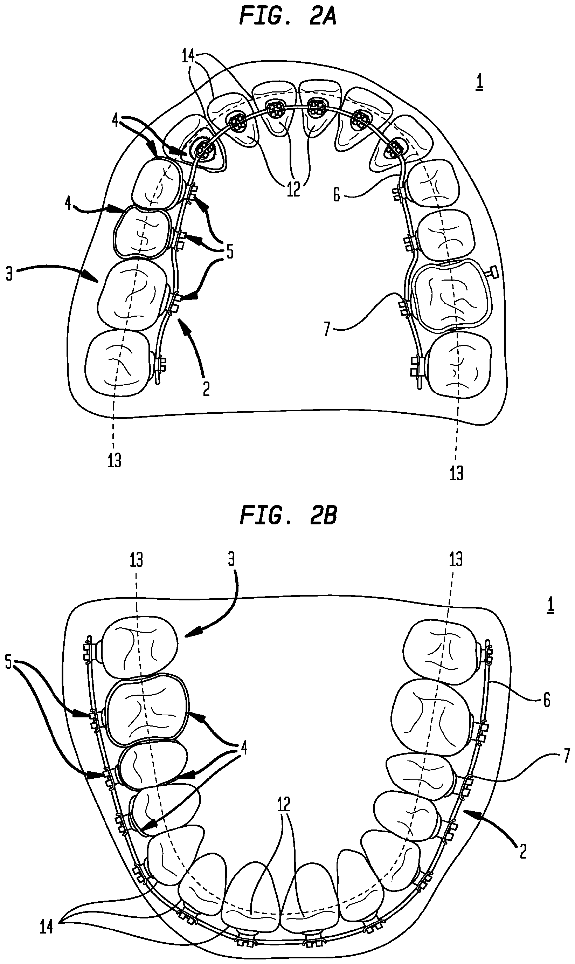

Now referring primarily to Figure 2A, as to particular embodiments, the orthodontic bracket extension system (1) can include one or more bracket base extensions (4) which can be mounted to the lingual surfaces (12) of respective teeth (3) around a dental arch (13), whereby the archwire (6) intercoupling the plurality of brackets (5) which in whole or in part can be secured in in the aperture (9) of a corresponding one or more bracket base extensions (4) extends around the lingual surfaces (12) of the teeth (3).

Now referring primarily to Figure 2B, as to particular embodiments, the orthodontic bracket extension system (1) can include one or more bracket base extensions (4) which can be mounted to the facial surfaces (14) of respective teeth (3) around the dental arch (13), whereby the archwire (6) intercoupling the plurality of brackets (5) which in whole or in part can be secured in the apertures (9) of a corresponding one more bracket base extensions (4) extends around the facial surfaces (14) of the teeth (3).

Now referring primarily to Figures 3A through Figure 3K, the orthodontic bracket extension system (1) can include a plurality of brackets (5) of an orthodontic appliance (2) and a plurality of bracket base extensions (4). Each of the brackets (5) can include a bracket base (8) having opposed bracket base first and second surfaces (15)(16) delimited by a bracket base periphery (17) which defines a bracket base surface area (18) of the bracket base first and second surfaces (15)(16). Each of the brackets (5) can further include a bracket body (19) having a bracket body length (20) disposed between bracket body first and second ends (21)(22). The bracket body first end (21) can be coupled to the bracket base second surface (16). The bracket body second end (22) terminates in an archwire slot (23) configured to receive an archwire (6) of the orthodontic appliance (2).

Again referring primarily to Figures 3A through Figure 3K, each of the bracket base extensions (4) can have opposed bracket base extension first and second surfaces (10)(11) delimited by a bracket base extension periphery (24) which defines a bracket base extension surface area (25) of the bracket base extension first and second surfaces (10)(11). The bracket base extension first surface (10) can be configured to fixedly mount to a corresponding one of the plurality of teeth (3) in the dental arch (13).

Again referring primarily to Figures 3A through Figure 3F, each of the bracket base extensions (4) can include an aperture (9) which communicates between opposed bracket base extension first and second surfaces (10)(11). The aperture (9) can be configured to receive or secure the bracket base (8). The bracket base (8) can be disposed in the aperture (9) of the bracket base extension (4). As shown the illustrative example of Figure 3D, the bracket base (8) can be disposed in the aperture (9) of the bracket base extension (4) to dispose the aperture periphery (26) in substantially contiguous relation to the bracket base periphery (17) to afford a substantially continuous combination of the bracket base extension first surface (10) and the bracket base first surface (15) configured to fixedly mount to a corresponding one of the plurality of teeth (3) in the dental arch (13).

Now referring primarily to Figures 3A, 3J and 3K, embodiments of the bracket base extension (4) can further include an aperture margin (28) terminating at the aperture periphery (26) and embodiments of the bracket base (8) can further include a bracket base margin (29) terminating at the bracket base periphery (17). The aperture margin (28) can be configured to overlappingly engage the bracket base margin (29). As shown in the illustrative example of Figure 3J, the aperture margin (28) of the bracket base extension first surface (10) can taper toward the aperture periphery (26) and the bracket base margin (29) of the bracket base second surface (16) can taper toward the bracket base periphery (17). The pair of opposed tapered surfaces (30)(31) can matingly engage when the aperture (9) of the bracket base extension (4) receives or secures the bracket base (8). As shown in the illustrative example of Figure 3K, the aperture margin (28) and the bracket base margin (29) can each terminate in a corresponding aperture periphery (26) and bracket base periphery (17) which abut in substantially contiguous relation and the bracket base extension (4) can further include a lip (32) projecting from the bracket base second surface (16) which extends in overlapping engagement of the bracket base margin (29) of the bracket base second surface (16). A numerous and wide variety of configurations of the aperture margin (28) and the bracket base margin (29) can be utilized which overlappingly engage to maintain the bracket base (8) in fixed or secured relation to the bracket base extension (4).

Now referring primarily to Figure 3A, as to particular embodiments, the bracket base (8) can be secured within the aperture (9) of the bracket base extension (4) to afford a one-piece combination of the bracket base (8) and the bracket base extension (4). As to particular embodiments, an amount of bonding adhesive (33) can be provided between the bondable surfaces of the bracket base periphery (17) and the aperture periphery (26). The bonding adhesive (33) can be cured in accordance with the manufacturer's specifications to secure the bracket base (8) in fixed relation to the bracket base extension (4). Any of a wide variety of bonding adhesives (33) can be used to fixedly secure the bracket base (8) within aperture (9) of the bracket base extension (4). Illustrative examples of bonding adhesives (33) can include methacrylate ester monomers (CAS No: 109-16-0); polyacetal (CAS No: 9002-81-7); bisphenol A epichlorhydrin resin (CAS No: 25068-38-6); ABSOLUTE Self-Adhesive Resin Cement, which can be obtained from Centrix, Inc., 770 River Road, Shelton, Connecticut 06484, USA; SCOTCHBOND Universal Adhesive, which can be obtained from 3M, 3M Center, St. Paul, Minnesota 55144, USA; or the like, or combinations thereof.

Now referring primarily to Figures 3B and 3C, as to other particular embodiments, the bracket base (8) and the bracket base extension (4) can both be formed from a weldable metal (34), such as carbon steel, high-strength low-alloy steel, stainless steel, aluminum, titanium, or the like, or combinations thereof. The bracket base (8) disposed in the aperture (9) of the bracket base extension (4) can be fixedly secured by any suitable method of welding which joins materials whether employed at the first or second surfaces of the bracket base extension (4) and bracket base (8) (or both). Illustrative examples include: soldering, arc welding, gas welding, resistance welding, energy beam welding, sold-state welding, or any method of welding which joins materials whether by coalescence or otherwise.

As an illustrative example, the bracket base (8) disposed in the aperture (9) of the bracket base extension (4) can be fixedly secured by laser beam welding (as shown in the illustrative example of Figure 3B) incorporating a laser (35) having a high power density (on the order of 1 MW/cm²) which results in relatively small heat-affected zones and relatively high heating and cooling rates. A spot size (37) of the laser beam (36) can vary in a range of between about 0.2 millimeters to about 1.0 millimeter; however, the invention need not be so limited, as the spot size (37) can be of lesser or greater size, depending upon the application. The depth of penetration of a laser beam (36) generated by the laser (35) in the bracket base extension (4) can not only be proportional to the amount of power supplied but can also be dependent upon the location of the focal point of the laser beam (36), whereby penetration can be enhanced when the focal point is slightly below the bracket base extension first or second surfaces (10)(11). As to particular embodiments, a continuous or pulsed laser beam (36) can be used, depending upon the application.

As to particular embodiments, in which laser beam welding fixedly secures the bracket base (8) in the aperture (9) of the bracket base extension (4), the bracket base (8) can be positioned in the aperture (9) of the bracket base extension (4) and millisecond-long pulses of the laser beam (36) can generate a weld (38) by moving the laser beam (36) to follow the juncture of the bracket base periphery (17) and the aperture periphery (26) to fixedly secure the bracket base (8) in the aperture (9) of the bracket base extension (4). As to particular embodiments, this can be achieved by manually moving the laser beam (36) along the juncture of the bracket base periphery (17) and the aperture periphery (26). As to other particular embodiments, movement of the laser beam (35) along the juncture of the bracket base periphery (17) and the aperture periphery (26) can be achieved with a mechanical movement apparatus (39), which can be guided in response to input from a laser scanner (40).

Now referring primarily to Figures 3D and 3E, the bracket base extension periphery (24) and the aperture periphery (26) can define a bracket base extension surface area (25) which inclusive of the area of the aperture (9) of the bracket base extension first surface (10) can be substantially greater than the bracket base surface area (18) of the bracket base first surface (15). Accordingly, a bracket base extension first surface (10) can afford a bonding surface area which can be substantially greater than the bonding surface area of the bracket base first surface (15), whereby the relatively greater bracket base extension surface area (25) can provide greater adherent forces between the orthodontic bracket extension system (1) and the corresponding teeth (3).

As used herein, the term "substantially greater" means greater than five percent (5%). As an illustrative example, a bracket base extension surface area (25) is substantially greater than a bracket base surface area (18) when the bracket base extension surface area (23) is at least 5% greater than the bracket base surface area (15). As an additional illustrative example, a bracket base extension surface area (23) of at least 10.5 mm² is substantially greater than a bracket base surface area (15) of 10 mm², as 10.5 mm² is at least 5% greater than 10 mm².

Again referring to Figures 3D and 3E, as to particular embodiments, the bracket base extension first surface (10) can further include bond enhancement elements (41) to increase adherent forces between the bracket base extension (4) and the respective lingual or facial tooth surfaces (12)(14). Bond enhancement elements (41) can include chemical bond enhancement elements (42), mechanical bond enhancement elements (43), or a combination thereof. For example, suitable chemical bond enhancement elements (42) can include silane treatment such as described in United States Patent No. 4,948,366. Suitable mechanical bond enhancement elements (43) can include ridges, pegs, grooves, particles (such as regularly-shaped particles including spheres, rods, or cones, or irregularly-shaped particles such as shards of ceramic material).

In the use of conventional forces and pressures to move the teeth (3) toward targeted positions or orientations over a period of time, greater adherent forces between the orthodontic bracket extension system (1) and the corresponding teeth (3) can eliminate or reduce the occurrence of detachment of one or more bracket base extensions (4) from the corresponding one or more teeth (3). Additionally, greater adherent forces can allow an orthodontic practitioner to prescribe one or more tipping force moments, in-out force moments, or torqueing force moments which can be substantially outside of the conventional range of orthodontic mechanics to move one or more teeth (3) in relation to the plurality of teeth (3) of a patient with an elimination or reduction in the occurrence of detachment of one or more bracket base extensions (4) from the corresponding one or more teeth (3).

Embodiments of the bracket base extension (4) can have various configurations adapted for increasing the bracket base extension surface area (25) of the bracket base extension first surface (10), which can be directly bonded to or engaged with the lingual or facial surface (12)(14) of a corresponding tooth (3). As to particular embodiments, the bracket base extension first surface (10) can be configured as a generally planar bracket base extension first surface (10). As to other particular embodiments, the bracket base extension first surface (10) can be configured as an arcuate bracket base extension first surface (10), which can have a concave or convex contour configured to conform to a corresponding convex or concave contour of a mountable tooth surface (12)(14) of a corresponding tooth (3).

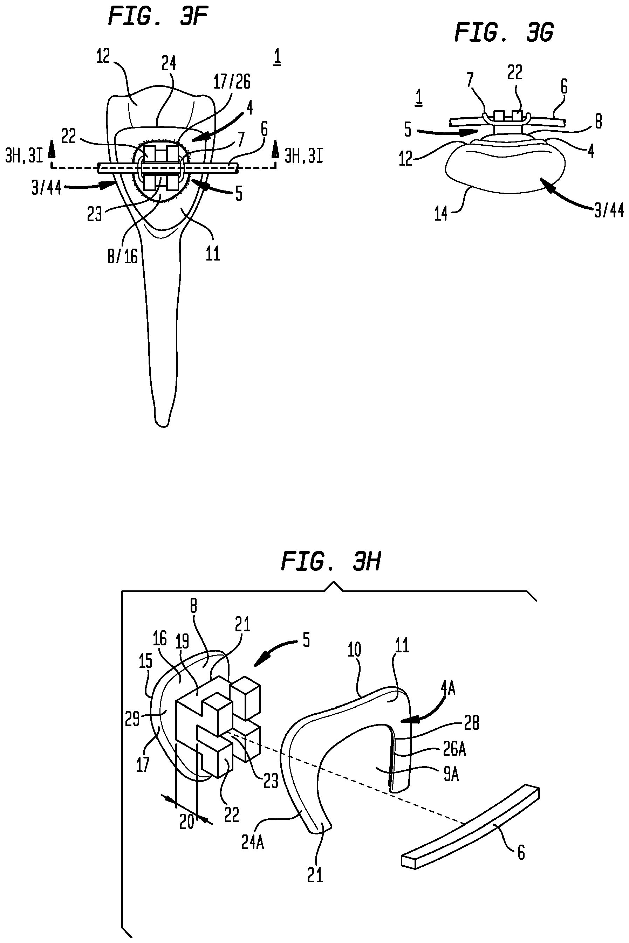

Now referring primarily to Figures 3F and 3G, as to particular embodiments, the bracket base extension first surface (10) can have a configuration adapted for directly bonding to the lingual surface (12) of a tooth (3), for example an incisor (44), whereby the bracket base extension first surface (10) can have a convex contour configured to conform to a corresponding concave contour of the lingual surface (12) of the incisor (44).

Now referring primarily to Figures 3H and 3G, the various bracket base extensions (4), above described can be modified to excise a portion of the bracket base extension (4) to provide a partial bracket base extension (4A), or the partial bracket base extension (4A) can be made in which the bracket base extension periphery (24) and the aperture periphery (26) do not circumferentially enclose the bracket base extension (4) or the aperture (9) but only define a bracket base periphery segment (24A) of the bracket base extension periphery (24) and a aperture periphery segment (26A) of the aperture periphery (26) which define an open sided aperture (9A). As shown in the illustrative examples, of 3H and 3G, the partial bracket base extension (4A) includes an open sided aperture (9A) in which the bracket base (8) can be disposed with a portion of the bracket base periphery (27) engaged with the aperture periphery segment (26A). The bracket base (8) can be fixedly secured in the open sided aperture (9A) as above described for the bracket base (8) fixedly secured in the aperture (9) of other embodiments of the bracket base extension (4). There can be a substantial advantage to the partial bracket base extension (4A) because the bracket base extension periphery segment (24A) and the bracket base aperture periphery segment (26A) can be disposed a distance from the gum line (56).

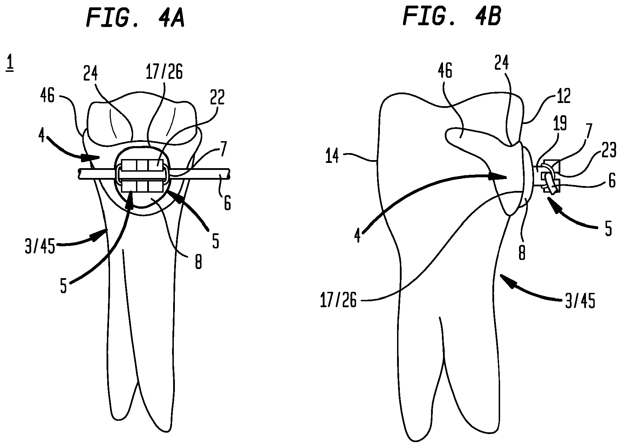

Now referring primarily Figure 4A and Figure 4B, as to particular embodiments, the bracket base extension first surface (10) can have a configuration adapted for directly bonding to the lingual surface (12) of a tooth (3), for example a bicuspid (premolar) (45), whereby the bracket base extension first surface (10) can have a concave contour configured to conform to a corresponding convex contour of the lingual surface (12) of the bicuspid (premolar) (45).

Again referring primarily to Figure 4A and Figure 4B, as to particular embodiments, the bracket base extension (4) can further include a partial band (46) adapted to extend, whether mesially or distally, about at least a portion of the tooth (3), for example the bicuspid (premolar) (45), to which the bracket base extension (4) affixes.

As to other particular embodiments, the bracket base extension (4) can further include a partial band (46) adapted to extend about at least a portion of the occlusal surface of the tooth (3) to which the bracket base extension (4) affixes.

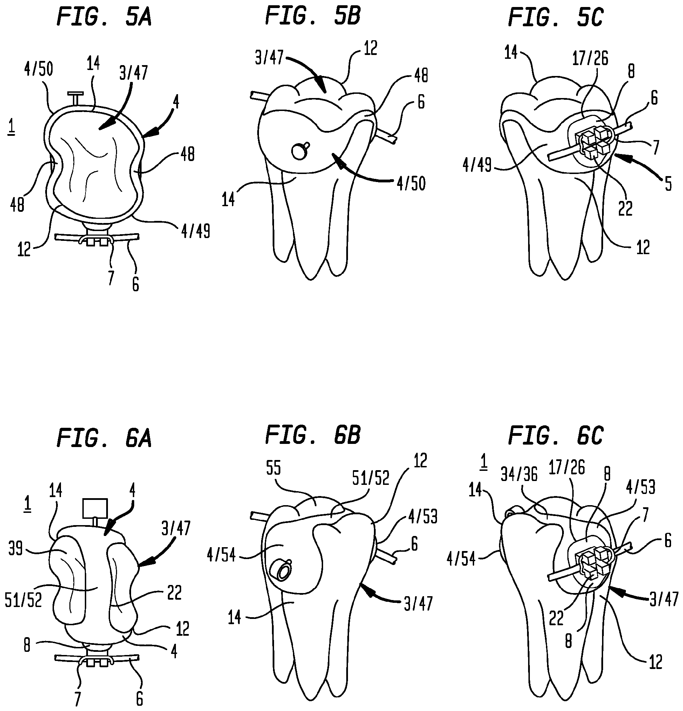

Now referring primarily to Figure 5A through Figure 5C, as to particular embodiments, the bracket base extension (4) can have a configuration adapted for directly bonding to both the lingual and facial surfaces (12)(14) of a tooth (3), for example a molar (47), whereby the bracket base extension (4) can further include a mesial-distal band (48) disposed between mesial-distal band lingual and facial portions (49)(50). The mesial-distal band (48) can be adapted to extend mesially-distally about the molar (47). As to the particular embodiments, the bracket base (8) disposed in the aperture (9) bracket base extension (4) can be coupled to the mesial-distal band (48) proximate the mesial-distal band lingual portion (49). As to other particular embodiments, the bracket base (8) disposed in the aperture (9) of the bracket base extension (4) can be coupled to the mesial-distal band (48) proximate the mesial-distal band facial portion (50).

Now referring primarily Figure 6A through Figure 6C, as to particular embodiments, the bracket base extension (4) can have a configuration adapted for directly bonding to both the lingual and facial surfaces (12)(14) of a tooth (3), for example a molar (47), whereby the bracket base extension (4) can further include a coronal band (51) having a coronal band medial portion (52) disposed between coronal band lingual and facial portions (53)(54). The coronal band (51) can be adapted to extend over a coronal portion (55) of the molar (47). As to the particular embodiments, the bracket base extension (4) and corresponding bracket base (8) can be coupled to coronal band (51) proximate the coronal band lingual portion (53). As to other particular embodiments, the bracket base extension (4) and corresponding bracket base (8) can be coupled to coronal band (51) proximate the coronal band facial portion (54).

Again referring primarily to Figures 1 and 2A and 2B, and Figures 3A through 3I, as to particular embodiments the bracket base (8) or the bracket base extension (4) can be fixedly mounted to one of the plurality of teeth (3) by application of an amount of bonding adhesive (33), as above described, on the bracket base surface area (18) or the bracket base extension surface area (25). The bracket base (8) or the bracket base extension (4) can disposed on the tooth (3) in a predetermined position or with a predetermined orientation, after which excess bonding adhesive (33) can be removed. As to particular embodiments, the bonding adhesive (33) can be cured, for example by using a high-intensity light, to secure the bracket base (8) or the bracket base extension (4) to the surface (12)(14) of the tooth (3). Subsequently, the bracket base (8) or bracket base extension (4) can be correspondingly fixedly mounted to the surface (12)(14) of a tooth (3) disposing bracket base (8) in the aperture (9) of the bracket base extension (4), after which excess bonding adhesive (33) can be removed and the bonding adhesive (33) cured. Upon fixedly mounting the combination of the bracket base (8) and bracket base extension (4) on one of a plurality of teeth (3), as to particular embodiments, the juncture between the aperture periphery (26) and the bracket base periphery (17) can, but need not necessarily, be joined by an amount of additional bonding adhesive (33) or by a weld (38), or laser welding as above described.

Now referring primarily to Figures 1, 2A and 2B, and 3B and 3C, as to particular embodiments, the bracket base (8) is disposed in the aperture (9) of the bracket base extension (4) and fixedly secured to the bracket extension (4) to form a one-piece construct, as above described, in which the base extension first surface (10) and the bracket base first surface (15) form a substantially continuous one-piece surface. The bracket base (8) and bracket base extension (4) can then be fixedly mounted as one-piece to one of the plurality of teeth (3) by application of an amount of bonding adhesive (33) to the combined surfaces of the bracket base extension first surface (10) and the bracket base first surface (15), as above described.

Regardless of the embodiment, upon fixed mounting of the bracket base (8) or the combination of the bracket base (8) and bracket base extension (4) on each one of a plurality of teeth (3), the archwire (6) can be disposed within the archwire slot (23) of the bracket body (19).

A method of producing an orthodontic bracket extension system (1) includes : obtaining (whether by purchase or fabrication) a bracket (5) for an orthodontic appliance (2), the bracket (5) including a bracket base (8) having opposed bracket base first and second surfaces (15)(16) delimited by a bracket base periphery (17) which defines a bracket base surface area (18) of the bracket base first and second surfaces (15)(16) and a bracket body (19) having a bracket body length (20) disposed between bracket body first and second ends (21)(22), the bracket body first end (21) coupled to the bracket base second surface (16), the bracket body second end (22) terminating in an archwire slot (23) configured to receive an archwire (6) of the orthodontic appliance (2). The method further includes obtaining a bracket base extension (4)(whether by purchase of fabrication) having an aperture (9) communicating between opposed bracket base extension first and second surfaces (10)(11) delimited by a bracket base extension periphery (17) which defines a bracket base extension surface area (25) of the bracket base extension first and second surfaces (10)(11). The aperture (9) in the bracket base extension (4) being configured to receive or secure the bracket base (8) in the aperture (9) and having a bracket base extension first surface (25) substantially greater than the bracket base surface area (15) of the bracket base first surface (15). The method further includes disposing the bracket base (8) within the aperture (9) of the bracket base extension (4).

As to particular embodiments, the method further includes fixedly securing the bracket base (8) within the aperture (9) of the bracket base extension (4) to provide the bracket base (8) and the bracket base extension (4) as a one-piece construct which can be bonded to a tooth (3). As to particular embodiments, the bracket base (8) can be secured in the aperture (9) with a bonding adhesive (33). As to other particular embodiments, the method can further include forming the bracket base (8) and the bracket base extension (4) from a weldable metal (34) and fixedly securing the bracket base (8) in the aperture (9) of the bracket base extension (4) by welding.

As to particular embodiments, the method can further include providing the bracket base (8) or the bracket base extension (4) with a chemical bond enhancement element (42). As to other particular embodiments, the method can further include providing the bracket base extension (4) with a mechanical bond enhancement element (43).

As to particular embodiments, components of the orthodontic bracket extension system (1), including the bracket (5) and bracket base extension (4), can each be entirely formed of the same material, or alternatively, can be formed from different materials. As to particular embodiments, components of the orthodontic bracket extension system (1) can be produced from any of a wide variety of materials which can be coupled to a tooth (3) and withstand forces or pressures transferred from the archwire (6) disposed within the bracket (5). By way of illustration, the material can include or consist of: metal, wood, plastic, plastic-like material, acrylic, polyamide, polyester, polypropylene, polyvinyl chloride-based materials, silicone-based materials, or the like, or combinations thereof.

As to particular embodiments, the method can further include configuring the bracket base extension first surface (10) to directly bond to a lingual surface (12) of one of the plurality of teeth (3). As to other particular embodiments, the method can further include configuring the bracket base extension first surface (10) to directly bond to a facial surface (14) of one of the plurality of teeth (3).

As to particular embodiments, the method can further include coupling a partial band (46) to the bracket base extension (4), the partial band (46) configured to extend about at least a portion of a tooth (3) to which the bracket base extension (4) fixedly mounts.

As to particular embodiments, the method can further include coupling a mesial-distal band (48) to the bracket base extension (4), the mesial-distal band (48) configured to extend mesially-distally about a tooth (3) to which the bracket base extension (4) fixedly mounts.

As to particular embodiments, the method can further include coupling a coronal band (51) to the bracket base extension (4), the coronal band (51) configured to extend over a coronal portion (55) of a tooth (3) to which the bracket base extension (4) fixedly mounts.

As to particular embodiments, components of the orthodontic bracket extension system (1) can be produced from any of a wide variety of processes depending upon the application, such as press molding, injection molding, fabrication, machining, printing, three-dimensional printing, or the like, or combinations thereof, as one piece or assembled from a plurality of pieces into an embodiment of a component of the orthodontic bracket extension system (1) or provided as a plurality of pieces for assembly into an embodiment of a component of the orthodontic bracket extension system (1).

Further disclosed but not within the scope of the claims is a method of using an orthodontic bracket base extension system (1), the method can include selecting a bracket (5) for an orthodontic appliance (2), the bracket (5) including a bracket base (8) having opposed bracket base first and second surfaces (15)(16) delimited by a bracket base periphery (17) which defines a bracket base surface area (18) of the bracket base first and second surfaces (15)(16) and a bracket body (19) having a bracket body length (20) disposed between bracket body first and second ends (21)(22), the bracket body first end (21) coupled to the bracket base second surface (16), the bracket body second end (22) terminating in an archwire slot (23) configured to receive an archwire (6) of the orthodontic appliance (2).

The method can further include selecting a bracket base extension (4) having opposed bracket base extension first and second surfaces (10)(11) delimited by a bracket base extension periphery (24) which defines a bracket base extension surface area (25) of the bracket base extension first and second surfaces (10)(11) and including an aperture (9) to receive or secure the bracket base (8), the bracket base extension first surface (10) configured to fixedly mount to a tooth (3) in a dental arch (10), whereby the bracket base extension surface area (25) of the bracket base extension first surface (10) is substantially greater than the bracket base surface area (15) of the bracket base first surface (15).

As to particular embodiments, the method can further include fixedly mounting the bracket base (8) to a tooth (3) in the dental arch (10) with an amount of bonding material (33). The method can further include fixedly mounting the bracket base extension (4) to the tooth (3) with an amount of bonding material (33) with the bracket base (8) disposed in the aperture (9) of the bracket base extension (4). The method can further include intercoupling a plurality of brackets (5) mounted to a plurality of teeth (3) by the archwire (6), and further retaining retain the archwire (6) in association with the plurality of brackets (5) with a ligature (7).

As to particular embodiments, in the alternative, the above method includes fixedly securing the bracket base (8) in the aperture (9) of the bracket base extension (4) forming a one-piece construct which the bracket base first surface (15) and the bracket base extension first surface (10) forms continuous or substantially continuous first surfaces (15)(10). The one-piece construct can be fixedly mounted to a tooth (3) in the dental arch (13) with an amount of bonding material (33). The method can further include intercoupling a plurality of brackets (5) mounted to a plurality of teeth (3) by the archwire (6), and further retaining the archwire (6) in association with the plurality of brackets (5) with a ligature (7).

As such, the particular embodiments or elements of the invention disclosed by the description or shown in the figures or tables accompanying this application are not intended to be limiting, but rather exemplary of the numerous and varied embodiments generically encompassed by the invention or equivalents encompassed with respect to any particular element thereof. In addition, the specific description of a single embodiment or element of the invention may not explicitly describe all embodiments or elements possible; many alternatives are implicitly disclosed by the description and figures.

In addition, as to each term used it should be understood that unless its utilization in this application is inconsistent with such interpretation, common dictionary definitions should be understood to included in the description for each term as contained in the Random House Webster's Unabridged Dictionary, second edition.

All numeric values herein are assumed to be modified by the term "about", whether or not explicitly indicated. For the purposes of the present invention, ranges may be expressed as from "about" one particular value to "about" another particular value. When such a range is expressed, another embodiment includes from the one particular value to the other particular value. The recitation of numerical ranges by endpoints includes all the numeric values subsumed within that range. A numerical range of one to five includes for example the numeric values 1, 1.5, 2, 2.75, 3, 3.80, 4, 5, and so forth. It will be further understood that the endpoints of each of the ranges are significant both in relation to the other endpoint, and independently of the other endpoint. When a value is expressed as an approximation by use of the antecedent "about," it will be understood that the particular value forms another embodiment. The term "about" generally refers to a range of numeric values that one of skill in the art would consider equivalent to the recited numeric value or having the same function or result. Similarly, the antecedent "substantially" means largely, but not wholly, the same form, manner or degree and the particular element will have a range of configurations as a person of ordinary skill in the art would consider as having the same function or result. When a particular element is expressed as an approximation by use of the antecedent "substantially," it will be understood that the particular element forms another embodiment.

Moreover, for the purposes of the present invention, the term "a" or "an" entity refers to one or more of that entity unless otherwise limited. As such, the terms "a" or "an", "one or more" and "at least one" can be used interchangeably herein.

The background section of this patent application provides a statement of the field of endeavor to which the invention pertains. The invention is defined in the claims.

## Claims

1. An orthodontic bracket extension system (1), comprising:
a bracket (5) of an orthodontic appliance (2) said bracket including:
a bracket base (8) having opposed bracket base first and second surfaces (15) (16) each delimited by a bracket base periphery (17) which defines a bracket base surface area (18) of said bracket base first and second surfaces (15) (16); and
a bracket body (19) having a bracket body length (20) disposed between bracket body first and second ends (21)(22), said bracket body first end (21) coupled to said bracket base second surface (16), said bracket body second end (22) having an archwire slot (23) configured to receive an archwire (6) of said orthodontic appliance (2); and
a bracket base extension (4) having opposed bracket base extension first and second surfaces (10)(11) delimited by a bracket base extension periphery (17) which defines a bracket base extension surface area (25) of said bracket base extension first and second surfaces(10)(1 1), said bracket base extension (4) having an aperture (9) delimited by an aperture periphery (26) communicating between said bracket base extension first and second surfaces(10)(11), said bracket base (8) disposable in said aperture (9) of said bracket base extension (4) to locate said bracket base first surface (15) in relation to said bracket base extension first surface (10) to allow said bracket base first surface (15) and said bracket base extension first surface (10) to fixedly mount to one of a plurality of teeth (3) in a dental arch, wherein the bracket base (8) is disposed in the aperture (9) of the bracket base extension (4) and fixedly secured to the bracket extension (4) to form a one-piece construct.

2. The system of claim 1, further comprising an aperture margin (28) terminating at said aperture periphery (26) and a bracket base margin (29) terminating at said bracket base periphery (17), said aperture margin (28) overlappingly engaging said bracket base margin (29).

3. The system of claim 1, said bracket base (8) secured in said aperture (9) of said bracket base extension (4) configured to directly bond to a lingual surface (12) of one of said plurality of teeth (3).

4. The system of claim 1, said bracket base secured in said aperture (9) of said bracket base extension (4) configured to directly bond to a facial surface (14) of one of said plurality of teeth (3).

5. The system of claim 1, said bracket base extension (4) further including a partial band (46) having at least one partial band element configured to extend about at least a portion of a tooth (3) to which said bracket base secured in said aperture (9) of said bracket base extension (4) fixedly mounts.

6. The system of claim 1, said bracket base extension (4) further including a mesial-distal band (48) configured to extend mesially-distally about a tooth (3) to which bracket base secured in said aperture (9) of said bracket base extension (4) fixedly mounts.

7. The system of claim 1, said bracket base extension (4) further including a coronal band (51) configured to extend over a coronal portion (55) of a tooth (3) to which said bracket base extension (4) secured in said aperture (9) of said bracket base fixedly mounts.

8. The system of claim 1, wherein said bracket base fixedly secured in said aperture (9) of said bracket base extension (4).

9. The system of claim 1, further comprising a chemical bond enhancement element (42) coupled to said bracket base first surface (15) or said bracket base extension first surface (10).

10. The system of claim 1, further comprising a mechanical bond enhancement element (43) coupled to said bracket base first surface (15) or said bracket base extension first surface (10).

11. The system of claim 1, wherein said aperture periphery (26) and said base extension periphery (24) correspondingly define a base extension periphery segment (24a) and an aperture periphery segment (26a) which define an open sided aperture (9a), said bracket base (8) disposable in said open sided aperture (9a) of said bracket base extension (4).

12. A method of producing an orthodontic bracket extension system (1) according to any one of the preceding claims, said method comprising:
obtaining a bracket (5) for an orthodontic appliance (2), said bracket (5) including:
a bracket base (8) having opposed bracket base first and second surfaces (15)(16) delimited by a bracket base periphery (17) which defines a bracket base surface area (18) of said bracket base first and second surfaces (15)(16); and
a bracket body (19) having a bracket body length (20) disposed between bracket body first and second ends (21)(22), said bracket body first end (21) coupled to said bracket base second surface (16), said bracket body second end (22) having an archwire slot (23) configured to receive an archwire (6) of said orthodontic appliance (2); and
obtaining a bracket base extension (4) having opposed bracket base extension first and second surfaces (10)(11) delimited by a bracket base extension periphery (17) which defines a bracket base extension surface area (25) of said bracket base extension first and second surfaces (10)(11), said bracket base extension (4) having an aperture (9) delimited by an aperture periphery (26) which communicates between said bracket base extension first and second surfaces (10)(11) configured to fixedly secure said bracket base (8) to form a one-piece construct, said bracket base extension first surface (10) having a greater area than said bracket base first surface (15) area.

13. The method of claim 12, wherein fixedly securing said bracket base (8) in said aperture (9) comprises welding said bracket base (8) in said aperture (9) of said bracket base extension (4) or adhering said bracket base (8) in said aperture (9).

## Patentansprüche

1. Erweiterungssystem (1) für eine Zahnspange, umfassend:
eine Spange (5) einer kieferorthopädischen Anwendung (2), wobei die Spange umfasst:
eine Spangenbasis (8), die gegenüberliegende erste und zweite Spangenbasisflächen (15, 16) aufweist, die jeweils durch eine Spangenbasisperipherie (17) begrenzt werden, die eine Spangenbasisflächengröße (18) der ersten und zweiten Spangenbasisflächen (15, 16) definiert, und
einen Spangenkörper (19), der eine Spangenkörperlänge (20) zwischen ersten und zweiten Spangenkörperenden (21, 22) aufweist, wobei das erste Spangenkörperende (21) mit der zweiten Spangenbasisfläche (16) gekoppelt ist und wobei das zweite Spangenkörperende (22) einen Drahtbogenschlitz (23) aufweist, der konfiguriert ist zum Aufnehmen eines Drahtbogens (6) der kieferorthopädischen Anwendung (2), und
eine Spangenbasiserweiterung (4), die gegenüberliegende erste und zweite Spangenbasiserweiterungsflächen (10, 11) aufweist, die durch eine Spangenbasiserweiterungsperipherie (17) begrenzt werden, die eine Spangenbasiserweiterungsflächengröße (26) der ersten und zweiten Spangenbasiserweiterungsflächen (10, 11) definiert, wobei die Spangenbasiserweiterung (4) eine Öffnung (9) aufweist, die durch eine Öffnungsperipherie (26), die die ersten und zweiten Spangenbasiserweiterungsflächen (10, 11) miteinander verbindet, begrenzt wird, wobei die Spangenbasis (8) in der Öffnung (9) der Spangenbasiserweiterung (4) angeordnet werden kann, um die erste Spangenbasisfläche (15) in Bezug auf die erste Spangenbasiserweiterungsfläche (10) zu positionieren, sodass die erste Spangenbasisfläche (15) und die erste Spangenbasiserweiterungsfläche (10) fix an einem aus einer Vielzahl von Zähnen (3) in einem Zahnbogen fixiert werden können, wobei die Spangenbasis (8) in der Öffnung (9) der Spangenbasiserweiterung (4) angeordnet und fix an der Spangenerweiterung (4) befestigt wird, um einen einstückigen Aufbau zu bilden.

2. System nach Anspruch 1, das weiterhin einen Öffnungsrand (28), der an der Öffnungsperipherie (26) endet, und einen Spangenbasisrand (29), der an der Spangenbasisperipherie (17) endet, umfasst, wobei der Öffnungsrand (28) überlappend mit dem Spangenbasisrand (29) eingreift.

3. System nach Anspruch 1, wobei die in der Öffnung (9) der Spangenbasiserweiterung (4) befestigte Spangenbasis (8) konfiguriert ist für eine direkte Verbindung mit einer Lingualfläche (12) eines aus der Vielzahl von Zähnen (3).

4. System nach Anspruch 1, wobei die in der Öffnung (9) der Spangenbasiserweiterung (4) befestigte Spangenbasis konfiguriert ist für eine direkte Verbindung mit einer Fazialfläche (14) eines aus der Vielzahl von Zähnen (3).

5. System nach Anspruch 1, wobei die Spangenbasiserweiterung (4) weiterhin ein Teilband (46) umfasst, das wenigstens ein Teilbandelement aufweist, das konfiguriert ist, um sich um wenigstens einen Teil eines Zahns (3) zu erstrecken, an dem die in der Öffnung (9) der Spangenbasiserweiterung (4) befestigte Spangenbasis fix montiert wird.

6. System nach Anspruch 1, wobei die Spangenbasiserweiterung (4) weiterhin ein Mesial-Distal-Band (48) umfasst, das konfiguriert ist, um sich mesial-distal um einen Zahn (3) zu erstrecken, an dem die in der Öffnung (9) der Spangenbasiserweiterung (4) befestigte Spangenbasis fix montiert wird.

7. System nach Anspruch 1, wobei die Spangenbasiserweiterung (4) weiterhin ein coronales Band (51) umfasst, das konfiguriert ist, um sich über einen coronalen Teil (55) eines Zahns (3) zu erstrecken, an dem die in der Öffnung (9) der Spangenbasiserweiterung (4) befestigte Spangenbasis fix montiert wird.

8. System nach Anspruch 1, wobei die Spangenbasis fix in der Öffnung (9) der Spangenbasiserweiterung (4) befestigt wird.

9. System nach Anspruch 1, das weiterhin ein Element (42) zur Verstärkung einer chemischen Bindung umfasst, das mit der ersten Spangenbasisfläche (15) oder der ersten Spangenbasiserweiterungsfläche (10) gekoppelt ist.

10. System nach Anspruch 1, das weiterhin ein Element (43) zur Verstärkung einer mechanischen Bindung umfasst, das mit der ersten Spangenbasisfläche (15) oder der ersten Spangenbasiserweiterungsfläche (10) gekoppelt ist.

11. System nach Anspruch 1, wobei die Öffnungsperipherie (26) und die Basiserweiterungsperipherie (24) entsprechend ein Basiserweiterungsperipheriesegment (24a) und ein Öffnungsperipheriesegment (26a) definieren, die wiederum eine offenseitige Öffnung (9a) definieren, wobei die Spangenbasis (8) in der offenseitigen Öffnung (9a) der Spangenbasiserweiterung (4) angeordnet werden kann.

12. Verfahren zum Herstellen eines Erweiterungssystems (1) für eine Zahnspange gemäß einem der vorstehenden Ansprüche, wobei das Verfahren umfasst:
Erhalten einer Spange (5) für eine kieferorthopädische Anwendung (2), wobei die Spange (5) umfasst:
eine Spangenbasis (8), die gegenüberliegende erste und zweite Spangenbasisflächen (15, 16) aufweist, die jeweils durch eine Spangenbasisperipherie (17) begrenzt werden, die eine Spangenbasisflächengröße (18) der ersten und zweiten Spangenbasisflächen (15, 16) definiert, und
einen Spangenkörper (19), der eine Spangenkörperlänge (20) zwischen ersten und zweiten Spangenkörperenden (21, 22) aufweist, wobei das erste Spangenkörperende (21) mit der zweiten Spangenbasisfläche (16) gekoppelt ist und wobei das zweite Spangenkörperende (22) einen Drahtbogenschlitz (23) aufweist, der konfiguriert ist zum Aufnehmen eines Drahtbogens (6) der kieferorthopädischen Anwendung (2), und
Erhalten einer Spangenbasiserweiterung (4), die gegenüberliegende erste und zweite Spangenbasiserweiterungsflächen (10, 11) aufweist, die durch eine Spangenbasiserweiterungsperipherie (17) begrenzt werden, die eine Spangenbasiserweiterungsflächengröße (26) der ersten und zweiten Spangenbasiserweiterungsflächen (10, 11) definiert, wobei die Spangenbasiserweiterung (4) eine Öffnung (9) aufweist, die durch eine Öffnungsperipherie (26), die die ersten und zweiten Spangenbasiserweiterungsflächen (10, 11) verbindet, begrenzt wird und konfiguriert ist, um die Spangenbasis (8) fix zu befestigen, um einen einstückigen Aufbau zu bilden, wobei die erste Spangenbasiserweiterungsfläche (10) eine größere Fläche aufweist als die erste Spangenbasisfläche (15).

13. Verfahren nach Anspruch 12, wobei das fixe Befestigen der Spangenbasis (8) in der Öffnung (9) das Schweißen der Spangenbasis (8) in der Öffnung (9) der Spangenbasiserweiterung (4) oder das Kleben der Spangenbasis (8) in der Öffnung (9) umfasst.

## Revendications

1. Système d'extension (1) de bracket orthodontique, comprenant :
un bracket (5) d'un appareil orthodontique (2), ledit bracket comprenant :
une base (8) de bracket comportant des première et deuxième surfaces (15) (16) de base de bracket opposées, chacune délimitée par une périphérie (17) de base de bracket qui définit une aire de surface (18) de base de bracket desdites première et deuxième surfaces (15) (16) de base de bracket ; et
un corps (19) de bracket ayant une longueur (20) de corps de bracket disposée entre des première et deuxième extrémités (21) (22) de corps de bracket, ladite première extrémité (21) de corps de bracket étant couplée à ladite deuxième surface (16) de base de bracket, ladite deuxième extrémité (22) de corps de bracket ayant une fente pour fil d'arc (23) configurée pour recevoir un fil d'arc (6) dudit appareil orthodontique (2) ; et
une extension (4) de base de bracket ayant des première et deuxième surfaces (10) (11) d'extension de base de bracket opposées, délimitées par une périphérie (17) d'extension de base de bracket qui définit une aire de surface (25) d'extension de base de bracket desdites première et deuxième surfaces (10) (11) d'extension de base de bracket, ladite extension (4) de base de bracket ayant une ouverture (9) délimitée par une périphérie (26) d'ouverture communiquant entre lesdites première et deuxième surfaces (10) (11) d'extension de base de bracket, ladite base (8) de bracket pouvant être disposée dans ladite ouverture (9) de ladite extension (4) de base de bracket pour positionner ladite première surface (15) de base de bracket en relation avec ladite première surface (10) d'extension de base de bracket afin de permettre à ladite première surface (15) de base de bracket et à ladite première surface (10) d'extension de base de bracket de se monter de manière fixe sur l'une d'une pluralité de dents (3) dans une arcade dentaire, la base (8) de bracket étant disposée dans l'ouverture (9) de l'extension (4) de base de bracket et attachée de manière fixe à l'extension (4) de bracket pour former une construction en une seule pièce.

2. Système selon la revendication 1, comprenant en outre une marge (28) d'ouverture se terminant à ladite périphérie (26) d'ouverture et une marge (29) de base de bracket se terminant à ladite périphérie (17) de base de bracket, ladite marge (28) d'ouverture s'engageant en superposition sur ladite marge (29) de base de bracket.

3. Système selon la revendication 1, ladite base (8) de bracket étant fixée dans ladite ouverture (9) de ladite extension (4) de base de bracket configurée pour adhérer directement à une surface linguale (12) de l'une de ladite pluralité de dents (3).

4. Système selon la revendication 1, ladite base de bracket étant fixée dans ladite ouverture (9) de ladite extension (4) de base de bracket configurée pour adhérer directement à une surface faciale (14) de l'une de ladite pluralité de dents (3).

5. Système selon la revendication 1, ladite extension (4) de base de bracket comprenant en outre une bande partielle (46) ayant au moins un élément de bande partielle configuré pour s'étendre autour d'au moins une partie d'une dent (3) sur laquelle ladite base de bracket fixée dans ladite ouverture (9) de ladite extension (4) de base de bracket est montée de manière fixe.

6. Système selon la revendication 1, ladite extension (4) de base de bracket comprenant en outre une bande mésiale-distale (48) configurée pour s'étendre mésialement-distalement autour d'une dent (3) sur laquelle la base de bracket fixée dans ladite ouverture (9) de ladite extension (4) de base de bracket est montée de manière fixe.

7. Système selon la revendication 1, ladite extension (4) de base de bracket comprenant en outre une bande coronaire (51) configurée pour s'étendre sur une partie coronaire (55) d'une dent (3) sur laquelle ladite base de bracket fixée dans ladite ouverture (9) de ladite extension (4) de base de bracket est montée de manière fixe.

8. Système selon la revendication 1, dans lequel ladite base de bracket est montée de manière fixe dans ladite ouverture (9) de ladite extension (4) de base de bracket.

9. Système selon la revendication 1, comprenant en outre un élément d'amélioration de liaison chimique (42) couplé à ladite première surface (15) de base de bracket ou à ladite première surface (10) d'extension de base de bracket.

10. Système selon la revendication 1, comprenant en outre un élément d'amélioration de liaison mécanique (43) couplé à ladite première surface (15) de base de bracket ou à ladite première surface (10) d'extension de base de bracket.

11. Système selon la revendication 1, dans lequel ladite périphérie (26) d'ouverture et ladite périphérie (24) d'extension de base définissent de manière correspondante un segment (24a) de périphérie d'extension de base et un segment (26a) de périphérie d'ouverture qui définissent une ouverture latérale ouverte (9a), ladite base (8) de bracket étant disposée dans ladite ouverture latérale ouverte (9a) de ladite extension (4) de base de bracket.

12. Procédé pour fabriquer un système d'extension (1) de bracket orthodontique selon l'une quelconque des revendications précédentes, ledit procédé comprenant :
obtenir un bracket (5) pour un appareil orthodontique (2), ledit bracket (5) comprenant :
une base (8) de bracket comportant des première et deuxième surfaces (15) (16) de base de bracket opposées, délimitées par une périphérie (17) de base de bracket qui définit une aire de surface (18) de base de bracket desdites première et deuxième surfaces (15) (16) de base de bracket ; et
un corps (19) de bracket ayant une longueur (20) de corps de bracket disposée entre des première et deuxième extrémités (21) (22) de corps de bracket, ladite première extrémité (21) de corps de bracket étant couplée à ladite deuxième surface (16) de base de bracket, ladite deuxième extrémité (22) de corps de bracket ayant une fente pour fil d'arc (23) configurée pour recevoir un fil d'arc (6) dudit appareil orthodontique (2) ; et
obtenir une extension (4) de base de bracket ayant des première et deuxième surfaces (10) (11) d'extension de base de bracket opposées délimitées par une périphérie (17) d'extension de base de bracket qui définit une aire de surface (25) d'extension de base de bracket desdites première et deuxième surfaces (10) (11) d'extension de base de bracket, ladite extension (4) de base de bracket comportant une ouverture (9) délimitée par une périphérie (26) d'ouverture qui communique entre lesdites première et deuxième surfaces (10) (11) d'extension de base de bracket configurées pour fixer de manière fixe ladite base (8) de bracket afin de former une construction en une seule pièce, ladite première surface (10) d'extension de base de bracket ayant une plus grande aire de surface que ladite première surface (15) de base de bracket.

13. Procédé selon la revendication 12, dans lequel l'attachement de manière fixe de ladite base (8) de bracket dans ladite ouverture (9) comprend le soudage de ladite base (8) de bracket dans ladite ouverture (9) de ladite extension (4) de base de bracket ou le collage de ladite base (8) de bracket dans ladite ouverture (9).
